# EUROPEAN PATENT APPLICATION

(11) **EP 3 034 355 A1**
(43) Date of publication of application: **22.06.2016**
(21) Application number: 14198183.7
(22) Date of filing: 16.12.2014
(51) Int. Cl.: B60P 3/14, B60P 7/08, B60R 7/02

(54) **A fastening system**

(71) Applicant: Modul-System HH AB, 431 22 Mölndal (SE)
(72) Inventor: Carlsson, Anders, SE-422 50 HISINGS BACKA (SE)
(74) Representative: Awapatent AB

(57) **Abstract**

A fastening system adapted to be attached to an inner surface of a cargo or back space of a service vehicle. The fastening system comprises at least one elongated fastening rail for fastening an item and at least one securing element for securing an item. The fastening rail is being adapted to be attached to an inner surface of the back space of the service vehicle. The item is secured by the securing element being adapted to press the item against at least a part of the fastening rail.

## Description

### Field of the Invention

The present invention relates to a fastening system adapted to be attached to an inner wall of a cargo or a back space of a service vehicle.

### Technical Background

It is common practise in the art of service vehicles to equip a back space or a cargo space of an automotive vehicle with module systems for example cupboards, tool holders, shelves or other module units. This is usually made in a separate step after the vehicle has been manufactured, i.e. the equipping of the vehicle in question is made separately from the manufacturing. Before the vehicle is equipped with specialised equipment, usually the back space of the vehicle is provided with an inner floor, usually made of wood, but the floor might also be made of for example an artificial, plastic material. This floor functions as a good support to work, stand and walk upon and is also used as an anchor plate for the module unit. The module unit is often also at least partly attached to the wall and the purpose is to counteract that the unit tip for example in a turn. It is common practise to secure the module unit/units to the wall with fasteners, with screws or the like penetrating the vehicle wall. There is also a risk during acceleration or retardation of the vehicle, that a module system or maybe one module unit thereof can break away which may cause damages. The module units, in particular when they are equipped with tools and material which are included in a toolkit, are usually rather heavy and may in such case present a potential safety risk. During retardation of the vehicle the module system may, if not securely attached, move forward with a large force and which in a serious scenario may break through into the driver cabin and thereby even cause personal injuries.

Alternatively to securing the module system directly to the vehicle wall the module system can be attached to a rail, which makes the module system more flexible, i.e. it can be moved without making more holes in the vehicle wall. One such example is shown in EP 1 894 773 A1. However, these kinds of rails are usually fastened directly to the vehicle wall, by for example screws.

Often the back space is also equipped with inner wall panels, usually made of wood, which are fastened to the inner wall of the back space using screws or rivets in order to make a nice appearance, reduce noise etc. Further, other accessories such as lamps, hooks, nets, cable holders etc are usually also attached directly to the inner wall of the vehicle using screws or the like.

However, both rails, walls and other accessories which are being directly attached to the vehicle walls by using screws or rivets are causing damages in the vehicle wall, i.e. it is weakening the car body. By drilling or screwing into the wall, the protecting barrier provided by the paint is damaged thereby exposing the sheet metal to corrosion resulting from i.e. moisture. Further, cables and other parts which may be arranged between an inner wall and an outer wall of the back space may be damaged by the drill or the screws.

Hence, there is a need for a system which does not cause weaknesses of the vehicle body, or damages the protecting paint layer or other parts, but which in the time is just as reliable.

### Summary of the Invention

The object of the present invention is to provide a fastening system that overcomes the above issues.

The invention is based on the insight that by having a fastening system, wherein an item is secured to the fastening rail with securing elements at least some of the screws which usually are used to fasten the items to the vehicle wall are eliminated, and hence some of the damages on the vehicle body can be reduced.

The invention relates to a fastening system adapted to be attached to a inner surface of a cargo or a back space of a service vehicle, said fastening system comprises at least one elongated member for fastening an item, said fastening rail being adapted to be attached to said inner surface of said back space,

at least one securing element, wherein said at least one securing element is adapted to press said item against at least a part of said fastening rail. The fastening rail together with the item and the securing element provide means for great customization of the interior design of the back space. The fastening rail may provide fastening zones for module systems such as shelves, cupboards, storage boxes or tool holding equipment. The fastening rail may also comprise fastening zones for fastening items such as inner wall panels, covering panels for covering inner ceiling or floor surfaces of a back space of a service vehicle. An item may also be a cable holder for holding cables, a profile for covering the joint where a wall panel and a roof or floor covering panel meet. An item may also be a holder for a lighting rail or a holder for other equipment. The item may be any other item a user would like to attach to the wall of the back space. The fastening rail may be cut into shorter elements, in order to fit different sized and shaped back spaces of vehicles, while still remaining its function. By pressing the item, for example a wall panel against at least a part of the fastening rail by at least one securing element, the wall panel may be attached to the inner vehicle wall, i.e. the inner surface of a back space of a service vehicle, without penetrating the vehicle wall. The same applies to the other items described above.

According to at least one exemplary embodiment said item is included in said fastening system. Thus, the fastening system includes the fastening rail, at least ont securing element and the item. As previously mentioned, said item may, for instance be a wall panel.

According to at least one exemplary embodiment, there is provided a fastening system adapted to be attached to an inner wall of a cargo or a back space of a service vehicle, said fastening system comprises at least one elongated fastening rail adapted to be attached to said inner wall of said back space, at least one wall panel, and at least one securing element, wherein said wall panel is adapted to be pressed against at least a part of said fastening rail by said at least one securing element. The fastening rail together with the wall panel and the securing element provide means for great customization of the interior design. The system may hence be a wall panel system. The fastening rail may provide a common element where further tools or inner wall panel may be attached too and it may provide fastening zones for module systems such as shelves, cupboards, storage boxes or tool holding equipment. At the same time it may provide a fastening area for the wall panel. The wall panel may be secured to this fastening area using the securing element. The fastening rail may be cut into shorter elements, in order to fit different sized and shaped back spaces of vehicles, while still remaining its function. By pressing the wall panel against at least a part of the fastening rail by at least one securing element, the wall panel may be attached to the vehicle wall without penetrating the vehicle wall.

According to at least one exemplary embodiment said securing element is a separate element, which is not part of fastening rail. With the term separate it is meant that the securing element is in one piece and not a part of neither the fastening rail nor the item. The item may be a wall panel and/or cable holder or any other item a user would like to attach to the wall of the back space. That the securing element is a separate element is advantageous in that the securing element may be adapted after what material the item is made of and what thickness the item has. Further, a mix of different securing elements may be used for fastening the item to the fastening rail. Further the securing element may be chosen depending on what expected load will be applied on the item. This means that cheaper securing element may be used when the item only is exposed to small loads.

According to at least one exemplary embodiment the item is adapted to be pressed between the fastening rail and the at least one securing element. Pressing the item between the fastening rail and the securing element provides a robust way of fastening the item to the fastening rail. The securing element may be chosen depending on the material if the item.

According to at least one exemplary embodiment the securing element is a screw, comprising a screw head and an at least partly threaded portion, wherein the screw head is adapted to press against the item during use and to be screwed into the fastening rail. This is advantageous since it is a simple, cheap and robust method of attaching the item to the fastening rail. The item can thereby be mounted with a screwdriver, and without further need for advanced special tools. Screws with different tool engaging portions may also be chosen i.e. screws which require unusual tools may provide added security means. The screw head may be adapted to press against the item directly or via a force spreading member such as a washer. If the screw is a self drilling screw the flexibility of the system may be higher. According to at least one exemplary embodiment a washer is adapted to be arranged between said screw head and said item during use.

According to one exemplary embodiment the fastening rail comprises at least one screw securing track extending at least partly in the longitudinal direction of the fastening rail into which the screw is adapted to be screwed into during use. By having a securing track, instead of securing holes, the mounting of, for example, a wall panel is simplified since the screw only needs to be screwed in aligned vertically, and not vertically and horizontally. This allows for a great adaptability. Further using a securing track, instead of securing holes, allows for the use of a great amount of screws to be used if necessary. The limitations would then be how many screws that can fit next to each other and not the number of predrilled holes. Another advantage of fastening the item to the fastening rail instead of attaching, for example, the wall panel by screwing it directly to the sheet metal of the inner wall, no drilled holes through the inner wall of the back space are necessary, which may weaken the wall and introduce rust, which in turn with time further weaken the wall.

According to one exemplary embodiment the screw securing track comprises of two opposite arranged inner walls extending in the longitudinal direction of the securing track, which during use are adapted to be screwed into using a self tapping screw. By having two opposite inner walls adapted to be screwed into using a self tapping screw allows for a simple mounting of the items.

According to one exemplary embodiment at least one of the inner walls extending in the longitudinal direction of the securing track comprises grooves. This is advantageous since grooves improve the securing contact between the screw and the screw securing track. Improving the securing contact, between the securing screw and the screw securing track, has the effect that the item can take a higher force load. This further increases safety during a vehicle crash event.

Further according to one exemplary embodiment the fastening rail comprises at least one undercut groove. The undercut groove may be adapted to fasten an item to it during use. This allows for equipment or interior to be attached to the fastening rail and enables step-less manoeuvrability of the equipment or the interior giving an almost unlimited amount of different interior design possibilities. The undercut groove may have a cross-section which is T-shaped. The module system or module units may be securely connected to said undercut groove. This way the module system or the module units can be safely arranged to the wall of the back space without making any damage, for example holes, in the wall of the back space. Alternatively, other items may also be attached to the undercut groove. However, the fastening rail is not limited to have an undercut groove. The module system or the module units may be connected to the fastening rail in any other suitable way, for example screwing into the fastening rail.

Further according to one exemplary embodiment the fastening rail comprises a wall contacting area. A wall contacting area is the area which will be in contact with the inner wall of the back space of the service vehicle.

According to one exemplary embodiment the wall contacting area is roughened for providing greater surface area.

According to one exemplary embodiment the wall contacting area comprises grooves extending in the longitudinal direction of the rail. Having grooves extending in the longitudinal direction of the rail or a roughened area on the wall contacting area a larger surface area is created. For example, if the fastening rail is attached to the wall of the service vehicle by adhesive a larger surface area is advantageous since it creates a better contact between the fastening rail and inner wall of the back space.

Further according to one exemplary embodiment the fastening rail is adapted to be attached to the inner wall by adhesive. This can be done through applying adhesive to the wall contacting area. It is advantageous to use adhesives for attaching the fastening rail against the inner wall as opposed to using the more standard method of attaching the a fastening rail by screwing it directly to the sheet metal of the inner surface. Other standard method involves drilling holes straight through the wall and using a nut and bolt for attaching the fastening rail. The holes created using standard methods weaken the inner wall and the back space and often introduce rust, which in turn with time may further weaken the wall.

According to one exemplary embodiment the adhesive used, for attaching the fastening rail to the vehicle wall, is a tape and/or glue. Using a tape creates a simple and easy way of attaching the fastening rail to the inner wall of the vehicle. The tape may be double sided i.e. having both sides with adhesive properties. Further the tape can be pre-attached to the fastening rail on the surface facing the inner wall of the vehicle. When mounted the strip of material protecting the side of the double sided tape, which will be attached to the inner wall of the vehicle, is removed. Thereafter the rail can mounted on the wall. With tape there is also no need to wait until the fastening rail can be loaded. Glue is a cheap way of attaching the fastening rail to the inner surface of the vehicle wall. Glue often offers great performance in relation to price. The glue may be sold separately or come packaged with the fastening system. Alternatively, a tape and an adhesive can be used together. The tape may prefix the fastening rail, i.e. hold the fastening rail in place while the adhesive cures. The adhesive may be a one component adhesive. For example the 3M™ Hybrid Adhesive Sealant 760 may be used. However, any other suitable adhesive may be used. It is preferably that it can take up the forces the fastening rail is going to be exposed to.

According to one exemplary embodiment said fastening rail is adapted to be attached to said inner wall by two different adhesives, wherein said first adhesive is a fast curing adhesive and said second adhesive is an adhesive which cures slower that said first adhesive. This makes it possible to adjust the fastening rail to the right position before the fast curing adhesive has been cured. The fast curing adhesive will fix the fastening rail in a correct position until the other adhesive, which will take up the forces during us, has been cured. The fast curing adhesive may be a tape.

Further according to one exemplary embodiment said securing element is a clip. The clip may be a snap clip. A snap clip improves the elastic properties of the clips. When a snap clip is mounted the user elastically deforms the snap clip, in order to place it in its intended position. After the clip has been mounted the clip will then want to return to its initial unloaded shape. If the clip cannot return to its initial shape, the result will be that the item will be preloaded with a force due to the clips strive to return to its initial shape. This increases the pressing force the clips exert on the item. It also makes mounting of the clips easier.

According to one exemplary embodiment said item is a wall panel.

The wall panel may be made of wood, laminated wood, medium-density fibreboard (MDF), composite wood, plywood, particle wood or other engineered wood panels. The wall panel may also be made from plastic materials. Softer panels may also be used as long as the force from the screw head is spread over a larger area of the wall panel by means of spacers or by adding a strip of metal or other harder material along the bottom edge of the wall panel.

According to at least one exemplary embodiment said wall panel has outer dimensions, which are equal or smaller than the dimensions of a EUR-pallet.

A EUR-pallet may also be called Euro-pallet or EPAL-pallet and is the standard European pallet as specified by the European Pallet Association (EPAL). The EUR-pallet has at the time of writing a dimension of 1200x800 mm. The dimensions are not limited to be according to standard European pallets as specified by the European Pallet Association (EPAL). They may for example have dimensions according to pallets of other standards, for example American standards. If the wall panel have the same outer dimensions as a EUR-pallet it can easily be transported thereon. However, the wall panel is not limited to have these dimensions.

According to one exemplary embodiment said wall panel has essentially the same length as the fastening rail.

According to one exemplary embodiment said fastening rail comprises at least one wall panel supporting element. By having at least one wall panel supporting element a wall panel can be supported by the fastening rail and be held in a correct position before it is secured to the fastening rail by the securing element. This enables a user to mount the wall panel alone without needing help of arranging the wall panel in a correct position.

According to one exemplary embodiment said item is cable holder, an illuminating device, a hook a fastening bracket or a lashing eyelet.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

Other objectives, features and advantages of the present invention will appear from the following detailed disclosure, as well as from the drawings.

### Brief Description of the Drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 shows an open-up perspective view of a service vehicle comprising a fastening system according to the invention showing different types of items, fastened to the fastening rails.
Fig. 2 shows an enlarged perspective view of the cut out a in Fig. 1 with a fastening bracket according to a first embodiment of an item fastened to the fastening rail.
Fig. 3 shows an enlarged perspective view of the cut out b in Fig. 1 with an illuminating device according to a second embodiment of the item fastened to the rail.
Fig. 4 shows an enlarged perspective view of the cut out c in Fig. 1 with a lashing eyelet, according to a third embodiment of the item, fastened to the fastening rail
Fig. 5 shows an enlarged perspective view of the cut out d in Fig. 1 with a cable holder, according to a fourth embodiment of the item, fastened to the fastening rail.
Fig. 6 shows an enlarged perspective view of the cut out e in Fig. 1 with a cargo net, according to a fifth embodiment of the item, fastened to the fastening rail
Fig. 7 shows an enlarged perspective view of the cut out f in Fig. 1 with a hanging hook, according to a sixth embodiment of the item, fastened to the fastening rail.
Fig. 8 shows an open-up perspective view of a service vehicle comprising a fastening system according to another embodiment of the invention with wall panels fastened to the fastening rail.
Fig. 9 shows one embodiment of the fastening rail in Fig. 8 and in Fig. 1 in perspective.
Fig. 10 shows an enlarged partial view of the fastening system in the cut out g in Fig. 8.
Fig. 11 shows the cross section B-B of the fastening system in Fig. 10,
Fig. 12a shows a fastening system with a fastening element according to a second embodiment shown in a similar view as Fig. 10.
Fig. 12b shows the cross section A-A of the fastening system in Fig. 12a, however without the inner side wall of the service vehicle.
Fig. 13 shows a partial perspective view of a fastening system according to another embodiment of the invention arranged close to the inner ceiling of a service vehicle.
Fig. 14 shows a partial perspective view of a fastening system according to another embodiment of the invention arranged close to the inner floor of a service vehicle.

All the figures are highly schematic, not necessarily to scale, and they show only parts which are necessary in order to elucidate the invention, other parts being omitted or merely suggested.

### Detailed Description of Exemplary Embodiments

Embodiments of the invention will be described in more detail in the following with reference to the accompanying drawings.

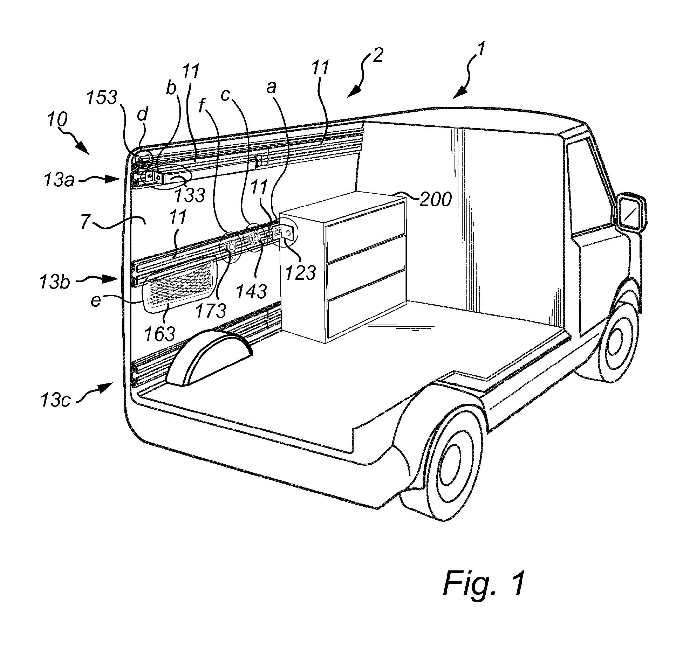

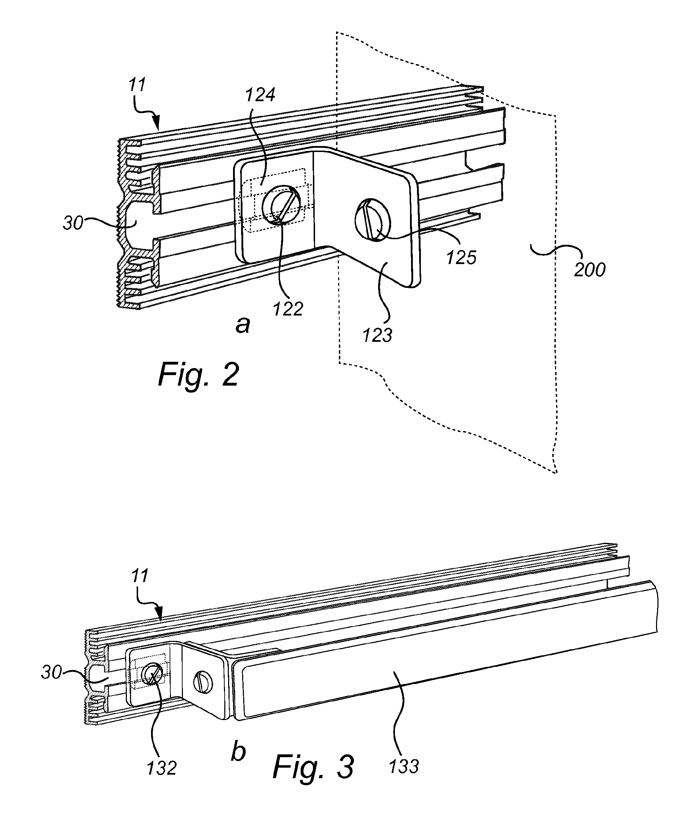

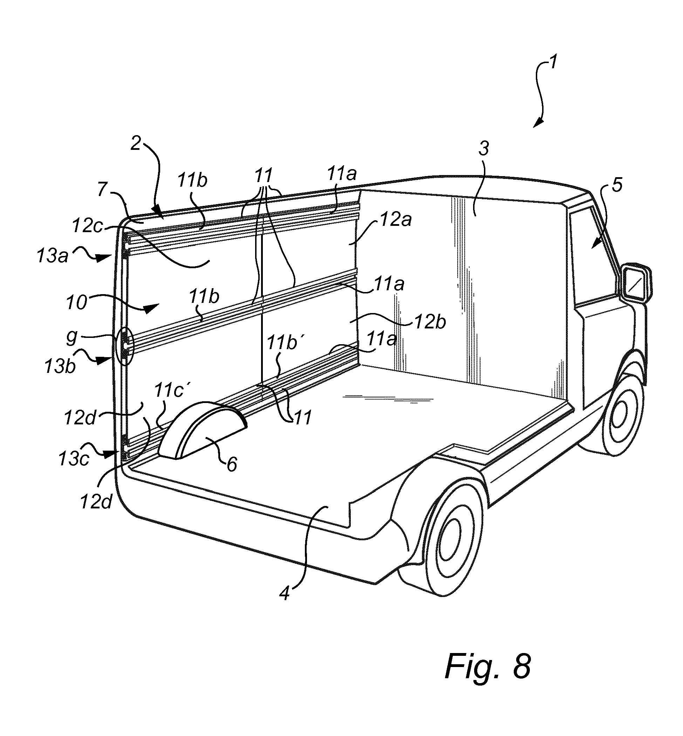

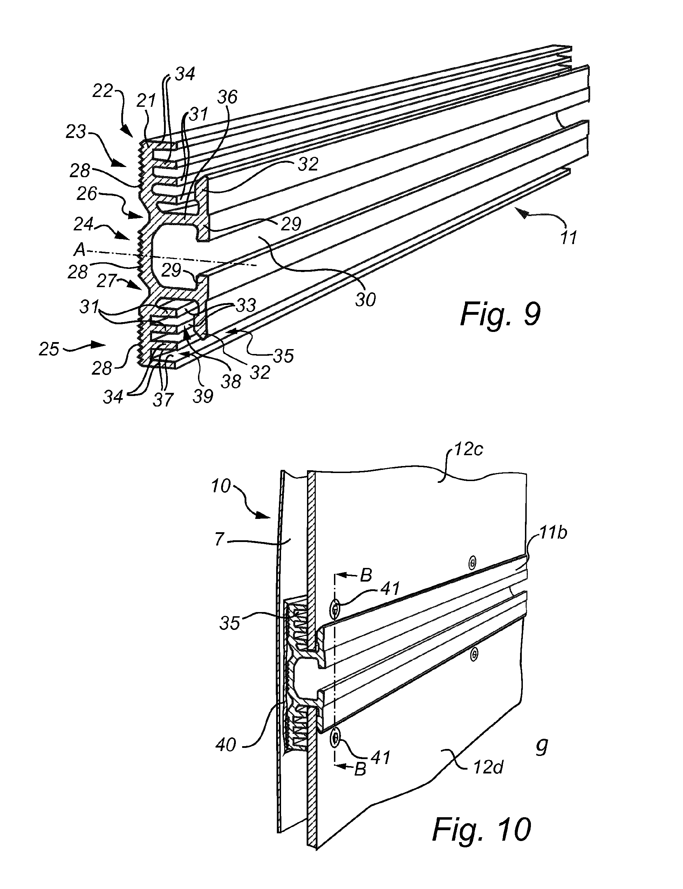

Fig. 1 shows a back space 2 of a service vehicle 1 comprising a fastening system 10. However, the back space could be a cargo space. The fastening system 10 comprises of several fastening rails 11, several wall items 123, 133, 143, 153, 163, 173 and several securing elements, not shown in Fig. 1, see Fig. 2-7. The fastening rails 11 are attached to the inside surface of a vehicle wall, i.e. to the inner wall 7 of the back space 2 of the service vehicle 1. The fastening rails 11 are orientated in the main forward direction of the service vehicle i.e. in the longitudinal direction of the vehicle. However depending on the shape of the back space there may be occasions where the fastening rails may be mounted transversely or partly transversely in relation to the forward direction of the service vehicle. The fastening rails 11 are comprised in different sets of fastening rails, a first set 13a, a second set 13c, and a third set 13b of fastening rails in a similar manner as in Fig 8. This is, hence, further explained in connection with Fig. 8, with the difference that in Fig.1 there are no wall panels attached to the fastening rails 11. Further, the fastening rails 11 comprises the same design as the fastening rail 11 in Fig. 9 and will hence be further discussed in connection with Fig. 9.

In Fig. 1 different items are fastened to the fastening rails 11. The following items are shown: a fastening bracket 123 for fastening a cupboard 200. Only one bracket is shown. More brackets may be used in order to better secure the cupboard; an illumination device, i.e. a lamp 133 fastened to an upper fastening rail; a lashing eyelet 143 fastened to the middle fastening rail; a cable holder 153 for holding cables fastened to the upper fastening rail; a cargo net 163 for holding cargo fastened to the fastening rail and a hook 173 for hanging items fastened to the middle fastening rail. Other items may in a similar way be arranged to the fastening rails 11.

All items may be fastened by different types of securing elements. The items may be secured to the undercut groove 30 of the fastening rail, see Fig. 9. Further the items may also be secured to the securing track 35 of the fastening rail, see Fig. 9. It is also possible to combine fastening of items using both the undercut groove 30 and the securing track 35. This increases the fastening possibilities of the fastening system.

Fig. 2 shows an enlarged view of the cut out a in Fig. 1 of the fastening rail 11 with a fastening bracket 123 for fastening a cupboard 200 or a shelf. The fastening bracket 123 comprises means, here in shape of openings for fastening the bracket to the cupboard 200 with for example a screw 125. The fastening bracket 123 has an L-shaped form. The bracket 123 is attached to the fastening rail 11 by a securing element in the form of a threaded bolt 122. The bolt 122 engages the fastening bracket 123 by pressing the fastening bracket between the head of the screw and the fastening rail 11. The opposite part of the bolt engages a fastening element 124, which works as nut and which is inserted in the undercut groove 30 showing the fastening rail 11. The example shows a bolt but other alternative securing elements may be used.

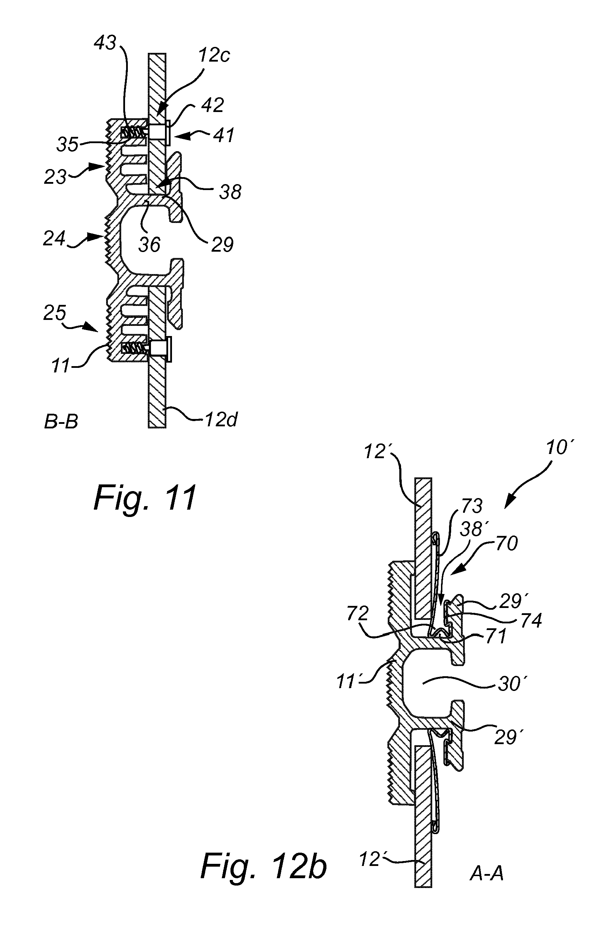

Fig. 3 shows an enlarged view of the cut out b in Fig. 1 of the fastening rail 11 having a lighting device 133, i.e. an illuminating device, fastened to the fastening rail 11. The lighting device 133 is fastened by being pressed between a securing element 132, i.e. a screw or a bolt, and the fastening rail 11. The lighting device may be fastened to the rail 11 in the same way as the fastening bracket 123 in Fig. 2 i.e. to the undercut groove 30. The lighting device 133 may also be secured to the fastening rail by the securing track 35, shown in Fig. 9 as described in connection with Fig. 10 and Fig. 11, except that instead of the wall panels in Fig. 10 and Fig. 11 the lightning device is fastened to the securing track 35.

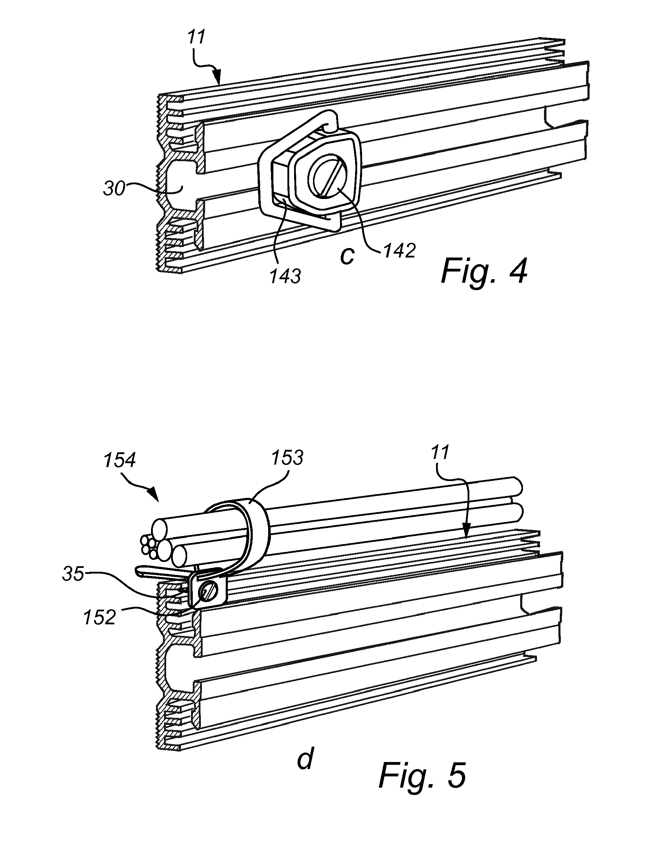

Fig. 4 shows an enlarged view of the cut out c in Fig. 1 of the lashing eyelet 143 fastened to the undercut groove 30 of the fastening rail 11. The lashing eyelet may be used for securing cargo or equipment in the service vehicle. The lashing eyelet is fastened to the fastening rail 11 by a securing element 142, i.e. a screw or a bolt, in the same way as the fastening bracket 123 in Fig. 2.

Fig. 5 shows an enlarged view of the cut out d in Fig. 1 of the cable holder 153, fastened to the fastening rail 11. The cable holder 153 may be used for holding, and for making cable routing simple and safe. The cable holder 153 is secured to the fastening rail 11 by using a securing element 152 in the shape of a screw, which is screwed into the securing track 35. Different types of cable holders, for holding different types and amount of cables may be secured to the fastening rail 11. The cable holder may alternatively be arranged to the undercut groove.

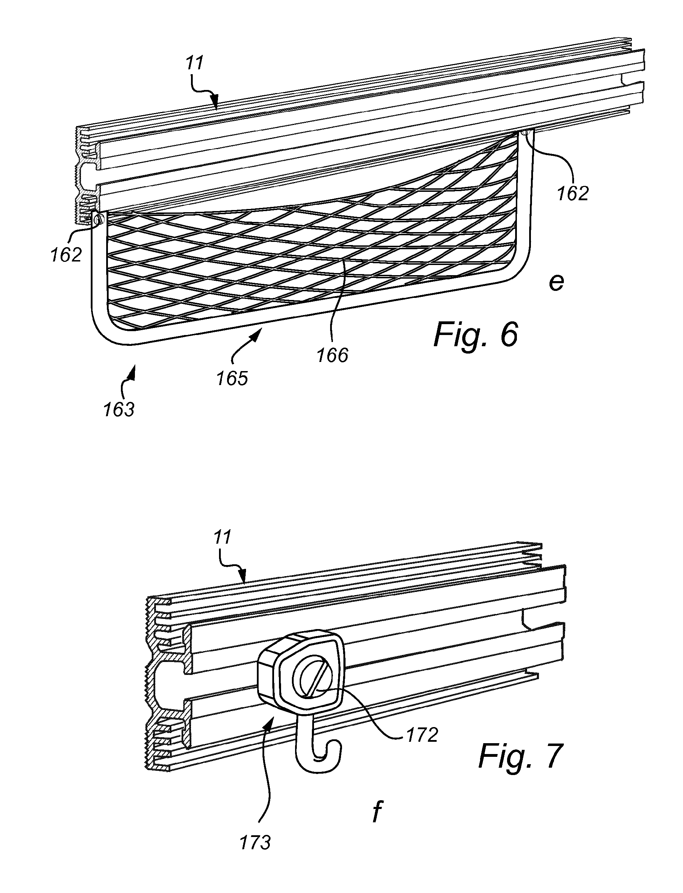

Fig. 6 shows an enlarged view of the cut out e in Fig. 1 of the cargo net 163, fastened to the fastening rail 11. The cargo net comprises a net 166 and a frame 165 for fixating the net 166. The cargo net 163 is secured to the fastening rail 11 by being pressed against the fastening rail 11 by two securing elements 162 in a similar way as the cable holder 153 in Fig. 5. The cargo net may alternatively be arranged to the undercut groove.

Fig. 7 shows an enlarged view of the cut out f in Fig. 1 of the hanging hook 173 fastened to a fastening rail 11. The hanging hook 173 comprises at least one hook. The hanging hook 173 is secured to the fastening rail 11 by a securing element, for example a bolt, in a similar way as the fastening bracket 123 in Fig. 2. The cable holder may alternatively be arranged to the undercut groove.

Fig.8 shows a back space 2 of a service vehicle 1 comprising a fastening system 10 according to another embodiment. The fastening system 10 comprises of several fastening rails 11, several items in the shape of wall panels 12a, 12b, 12c, 12d, and several securing elements, not shown in Fig. 8, see Fig. 10. The fastening rails 11 are attached to the inside surface of a vehicle wall, i.e. to the inner wall 7 of the back space 2 of the service vehicle 1. The fastening rails 11 are orientated in the main forward direction of the service vehicle i.e. in the longitudinal direction of the vehicle. However depending on the shape of the back space there may be occasions where the fastening rails may be mounted transversely or partly transversely in relation to the forward direction of the service vehicle. The fastening rails 11 are comprised in different sets of fastening rails, a first set 13a, a second set 13c, and a third set 13b of fastening rails.

The first set of fastening rails 13a is arranged in the upper part of the back space 2 and it comprises of two fastening rails 11, a first fastening rail 11 a and a second fastening rail 11 b. The first fastening rail 11 a is arranged close to the wall 3 separating the back space 2 with the driver's compartment 5. The second fastening rail 11 b is arranged such that one end of the first fastening rail 11 a faces and is arranged in contact with an end of the second fastening rail 11 b.

The second set of fastening rails 13c comprises of three fastening rails 11 a, 11b', 11 c'. The second set of fasteners 13c are arranged in the lower part of the back space 2, near the cargo floor 4. The first fastening rail 11 a is arranged close to the wall 3 separating the back space 2 with the driver's compartment 5. The second fastening rail 11b' is arranged such that one end of the first fastening rail 11 a faces and is arranged in contact with an end of the second fastening rail 11b'. The other end of the second fastening rail 11b' is arranged close to the wheel housing 6. The second fastening rail 11b' is shorter than the first fastening rail 11 a in the second set of fastening rails 13c. The third fastening rail 11c' is arranged on the other side of the wheel housing 6, which is between the wheel housing 6 and a back door (not shown) of the service vehicle 1.

The third set of fastening rails 13b is arranged in between the first set and the second set of fastening rails 13a, 13b, and it comprises of two rails 11, a first fastening rail 11 a and a second fastening rail 11 b. The first fastening rail 11 a is arranged close to the wall 3 separating the back space 2 with the driver's compartment 5. The second fastening rail 11 b is arranged such that one end of the first fastening rail 11 a faces and is arranged in contact with an end of the second fastening rail 11 b.

That each second fastening rail 11 b, 11b' is arranged such that one end of each first fastening rail 11 a faces and is arranged in contact with an end of a respective second fastening rail 11 b is to accomplish that a rectilinear securing track is formed. That is, the fastening rails are arranged in a substantially straight line one after the other.

Alternatively, instead of having two or three fastening rails arranged such that a rectilinear track is formed, there may be more or only one fastening rails in each set of fastening rails. The length of the fastening rails may be the same or differ. The ends of two fastening rails in a set of fastening rails 13a, 13b, 13c may also be joined together end to end by a coupling element (not shown). Such a coupling element could improve the strength of the fastening system. They may also be arranged with a distance between each other.

The fastening rails 11, i.e. all fastening rails 11 a, 11 b, 11b', 11c' in all sets of fastening rails 13a, 13b, 13c are fastened to the inner surface of the vehicle wall 7 by an adhesive. Each set of fastening rails are arranged essentially parallel to each other and in the longitudinal direction of the service vehicle 1.

A first wall panel 12a is arranged to inner vehicle wall 7 by arranging it between the first fastening rail 11a of the first set of fastening rails 13a and the first fastening rail 11a of the third set of fastening rails 13b, by having an upper portion of the wall panel 12a arranged to the first fastening rail 11 a of the first set of fastening rails 13a and a lower portion arranged to the first fastening rail 11a of the third set of fastening rails 13b.

A second wall panel 12b is arranged to the inner vehicle wall 7 by arranging it between the first fastening rail 11 a of the third set of fastening rails 13b and the first fastening rail 11a of the second set of fastening rails 13c, by having an upper portion of the wall panel 12b arranged to the first fastening rail 11a of the third set of fastening rails 13b and a lower portion arranged to the first fastening rail 11 a of the second set of fastening rails 13c.

A third wall panel 12c is arranged to the inner vehicle wall 7 by arranging it between the second fastening rail 11 b of the first set of fastening rails 13a and the second fastening rail 11 b of the third set of fastening rails 13b, by having an upper portion of the wall panel 12c arranged to the second fastening rail 11 b of the first set of fastening rails 13a and a lower portion arranged to the second fastening rail 11 b of the third set of fastening rails 13b.

A fourth wall panel 12d is arranged to the inner vehicle wall 7 by arranging it between the second fastening rail 11 b of the third set of fastening rails 13b and the second fastening rail 11b' and the third fastening rail 11c' of the second set of fastening rails 13c, by having an upper portion of the wall panel 12d arranged to the second fastening rail 11 b of the third set of fastening rails 13b and a lower portion arranged to the second fastening rail 11b' and the third fastening rail 11c' of the second set of fastening rails 13c.

Further reference to how the wall panels 12, 12a, 12b, 12c, 12d are arranged to the fastening rails 11, 11a, 11 b, 11c, 11 d is shown in Fig. 10 where it is shown how the wall panel 12c is arranged and attached to the second fastening rail 11 b of the third set of fastening rails. The other wall panels 12b, 12c, 12d shown in Fig. 1 are attached to respective fastening rail in a similar way. The wall panels 12a, 12b, 12c, 12d each has a length which is essentially equal to the length of the fastening rails 11 a, 1 b. They may however be longer or shorter. The wall panels 12a, 12b, 12c, 12d may also additionally be fastened to the inner wall of the service vehicle by using hook and loop fasteners in order attach the wall panel to the inner wall further in order to avoid clatter.

The fastening system 10 may also be mounted on the wall 3 separating the driver's compartment 5 and the back space 2 and onto an inner wall (not shown) opposite inner wall 7.

Fig. 9 shows one of the fastening rails 11a, 11 b, 11b', 11c' in Fig.8. All fastening rails 11 a, 11 b, 11b', 11c' have the same cross-section, however the length of the fastenings rails may differ. The fastening rails 11 a, 11 b, 11b', 11c' will hence be described as fastening rail 11. The fastening rail 11 is preferably made from metal i.e. aluminium or steel which preferably has been formed from a sheet of metal, forged from molten metal or extruded. The fastening rail may also be made from high strength composites or engineering plastics.

The fastening rail 11 is an elongated element. The fastening rail comprises a wall contacting portion 21. The wall contacting portion 21 comprises a back surface, i.e. a wall contacting area 22, which will be facing and lying against the inner surface of the vehicle wall when mounted to the vehicle wall 1. The back surface 22 is divided into different adhering zones, two outer adhering zones 23, 25 and a middle adhering zone 24 between the two outer adhering zones 23, 25. The adhering zones 23, 24, 25, are adapted to be connected to the vehicle wall by adhesives.

The fastening rail 11 may consist of fewer or more adhering zones depending on what loads that are applied to the fastening rail. The adhering zones 23, 24, 25 comprise grooves 28 extending in the longitudinal direction of the fastening rail 11. The grooves 28 increase the contact area between the adhesive and the adhering zones 23, 24, 25. Other alternatives to the grooves are surface pores, a course surface, an irregular surface, surface dimples, surface recesses or surface protrusions extending in the longitudinal direction.

Between the outer adhering zones 23, 25 and the middle adhering zone 24 are adhesive expansion volumes, 26, 27 arranged. The adhesive expansion volumes 26, 27 are grooves which are larger than the grooves 28 in the adhering zones 23, 24, 25. The adhesive expansion volumes 26, 27 have a largely triangular shaped cross-section. The adhesive expansion volumes 26, 27 allow excessively applied adhesive to fill when the fastening rail 11 is being mounted on the inner wall 7 of the service vehicle. This helps with the usability in regards to the process of installing the fastening rail by alleviating the problems that otherwise might occur when using too much adhesive.

The wall contacting portion 21 comprises two opposite sides, where the back side is on one side and from the other side two T-shaped portions 29 protrude from the wall contacting portion 21.The T-shaped portions 29 protrude from the wall contacting portion 21 perpendicularly to the back surface 22. Together the t-shaped portions create an undercut groove 30. The undercut groove 30 will be facing the inside of the service vehicle when the fastening rail 11 is secured to the inner wall 7 of the service vehicle 1.

The undercut groove 30 is used for fastening automotive vehicle equipment such i.e. cupboards, tool holders, shelves or other module units, as shown in Figs. 2, 3, 4 and 7.

On both sides of the T-shaped protrusions 29, opposite the undercut groove 30 and under the top portion 32 of the T-shaped protrusion 29, which are extending away from the undercut groove 30 are two wall panel supporting protrusions 31. The two wall panel supporting protrusions 31 protrude from the wall contacting portion 21 perpendicularly to the back surface 22. Between the underside of the top portion 32 of the T-shaped protrusion 29, which is forming wall panel supporting element 32, and the ends 33 of the two wall panel supporting protrusions 31 a wall receiving space 38 is created, and a wall panel can be supported therein. Thus, the wall receiving space 38 holds the wall panel in place during the mounting of the wall panel. It also serves as an additional safety measure, holding a wall panel in place, during a vehicle crash event.

On both sides of the T-shaped protrusions 29, opposite the undercut groove 30, two screw securing members 34 protrude from the wall contacting portion 21. They protrude perpendicularly to the back surface 22 on the same side of the wall contacting portion 21 as the T-shaped protrusions 29. The two screw securing members 34 forms a screw securing track 35 in the longitudinal direction of the fastening rail 11. The securing track 35 comprises of two opposite arranged inner walls 37 extending in the longitudinal direction of said securing track 35, which inner walls 37 during use are adapted to be screwed into using a self tapping screw. The screw securing track 35 is arranged so far away from the undercut groove 30 that the T-shaped protrusions 29 does not cover the opening 39 of the screw securing track 35, i.e. the screw securing tracks 35 are arranged so far away from the T-shaped protrusions so that wall panel securing screws securely can engage and hold a wall panel in place when screws are fastened into the screw securing track 35. The walls 37 of the screw securing track 35 may have means, for example grooves, for improving the engagement between threads of wall panel securing screws and the surface of the screw securing track 35.

The fastening rail 11 may also comprise means for holding electric cables thus adding cable holding properties to the rail. Such cable holding means may be an added edge, or a hole or a hook where i.e. a cable tie encircling a bundle of cables may be held in place.

The fastening rail 11 has been described as comprising a cross-section which is symmetrical on both sides of an axis A which is arranged in the middle of the undercut groove 30, i.e. that on both sides of the undercut groove 30 there are both screw securing members 34 and wall panel supporting elements 31. However, the fastening rails are not limited to this. Only one screw securing member 34 and one wall panel supporting element 31 may be arranged on one side of the undercut groove 30. On the other side of the undercut groove 30 the rail may have a different design. For example, the fastening rails 11 which are arranged in the upper part or the lower part of the back space 2, i.e. close to the roof or the floor may have a shape on one side of the undercut groove 30, which make a smooth transition to the roof or the floor (not shown) and which may allow the fastening rail 11 to be attached to or in contact with the roof or the floor.

Fig. 10 shows a close up of the fastening system 10 in Fig. 8 where the fastening rail 11 b is attached to the inner surface of the vehicle wall 7 of the back space of the service vehicle using an adhesive 40. Attached to the fastening rail 11 b are an upper and a lower wall panel 12c, 12d. The wall panels 12 are attached to the fastening rail 11 by securing elements 41. The securing elements are screws 41. The wall panels 12c, 12d are pre-drilled in order to make a hole through which the screw 41 can be inserted before it is screwed into the screw securing track 35. Alternatively, the screw can be a self drilling screw which is screwed through the wall panel 12 before being screwed into the screw securing track 35.

Fig. 11 shows the cross section B-B of the fastening system 10 in Fig. 10. Fig. 11 shows the wall panel 12c inserted into the wall receiving space 38 and the wall panel 12c is supported from below by the stem 36 of the T-shaped portions 29. The wall panel 12c is secured by the screw 41. The screw comprises a head 42 and a body 43. The screw body 43 protrudes through the wall panel 12c, 12d and the screw body 43 comprises threaded portion. The threaded portion of the screw 41 engages the walls of the screw securing track 35. The wall panels 12c, 12d are secured by being pressed against the fastening rail 11 by the head 42 of the screw 41. The Fig. 11 also shows the adhering zones 23, 24, 25 arranged to be attached to the inner surface of the vehicle wall.

Attaching the fastening rail 11 to the vehicle wall 7 comprises the steps of: applying adhesives on the wall contacting area 22, and especially to the different adhering zones 23, 24, 25. Temporary fixating the fastening rail 11 against the inner surface of the vehicle wall 7 of the automotive vehicle with use of a temporary fixating member (not shown); and holding it in place until the adhesive has adhered and the temporary fixating member may be removed. Alternatively, the adhesive may be applied to the inner wall of the back space. The temporary fixating member may however be of the kind which does not have to be removed. The temporary fixating means may be a tape, a vacuum holder device or a fast setting adhesive which has been applied to part of the three fastening surfaces. It may further be a double sided tape covering parts of the adhering zones. It may also be applied to one of the adhering zones, instead of adhesive. When the adhesive has cured and the fastening rails 11 are arranged to the inner surface of the vehicle wall 7 of the back space 2 the wall panels 12 are arranged between the fastening rails, they are thereafter fixed to the fastening rails 11 by the screws. That is, each wall panel 12 is pressed between a fastening rail 11 and each screw head 42 of the screws 41.

A washer (not shown) may be arranged between the screw head 42 and the wall panel 12.

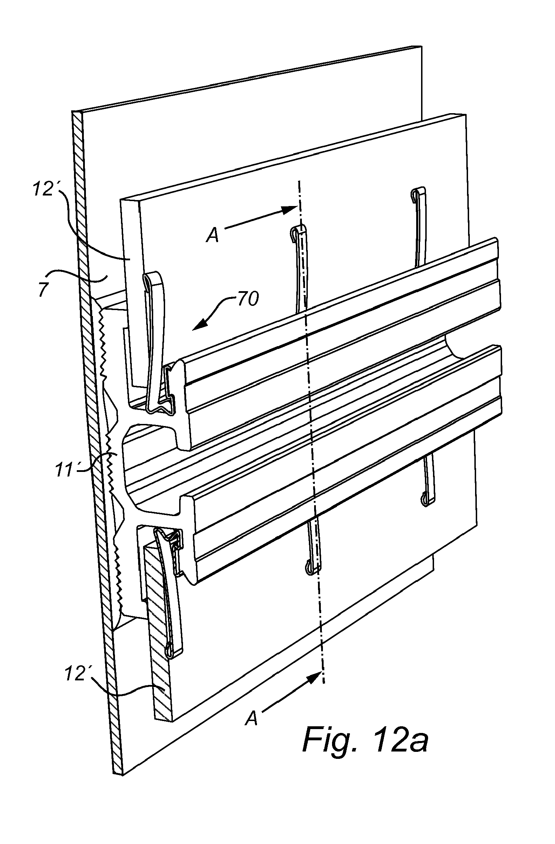

Fig. 12a and 12b shows a second embodiment of a fastening system 10', where the fastening rail 11' has a similar design as the fastening rail 11 in Fig. 8-11 except that it does not comprise the screw securing members 41, i.e. the screws and the wall panel supporting elements 31 in Fig. 9. A larger wall receiving space 38' is hence created on each side of the undercut groove 30' into which two wall panels 12' are respectively arranged. The wall panels 12' are pressed against the fastening rail 11' by securing elements 70 in the form of wall panel clips 70. The clips 70 are made from sheet metal and are a kind of snap clips. Each clip 70, has a L-shaped cross section. The bottom part 71 of the L-shaped clip which is close to the undercut groove 30' when mounted to the fastening rail 11', comprises an inverted V-shaped bend 72 and it ends with an upward protruding portion 74 which follows the shape of the T-shaped portions 29' of the fastening rail 11'. A bent portion 73 extends from the bottom part 71 on the opposite side and it abuts the wall panel 12' when arranged in the wall receiving space 38'.

The form of the clip improves the elastic properties of the clips. When the clips 70 are being mounted the user elastically deforms the clips 70, in order to place it in its intended position. After the clip has been mounted the clip will then want to return to its initial unloaded shape. If the clip cannot return to its initial shape, the result will be that the wall panel will be preloaded with a force due to the clips strive to return to its initial shape. This increases the pressing force the clips exert on the wall panels. It also makes mounting of the clips easier. The clip 70 may be shaped so that improper mounting of the clip is not possible. The clip 70 may also be shaped so that proper mounting of the clips gives of sound, such as a click sound, when the clips is in a mounted position. The clip 70 may have an extension in the longitudinal direction of the vehicle, when mounted, which is dependent on the material used for the clip and the shape of the clip so that the clip 70 works properly.

Further the clip 70 may have additional means for making mounting of the clips 70 simpler. The clip 70 may further have means for attaching cables to the snap clip 70.

The securing elements may also be made from plastic material. In order to increase the pressing force from the wall securing elements, these may be made as a solid body of i.e. plastic material. Depending on the shape of such solid wall securing elements these may be mounted using tools. The securing elements may alternatively be made as a continuous long securing element having a length, in the vehicle direction, equal or longer than the height of the securing element. Wall panels may also be secured using a mix of different securing elements i.e. using screws and clips.

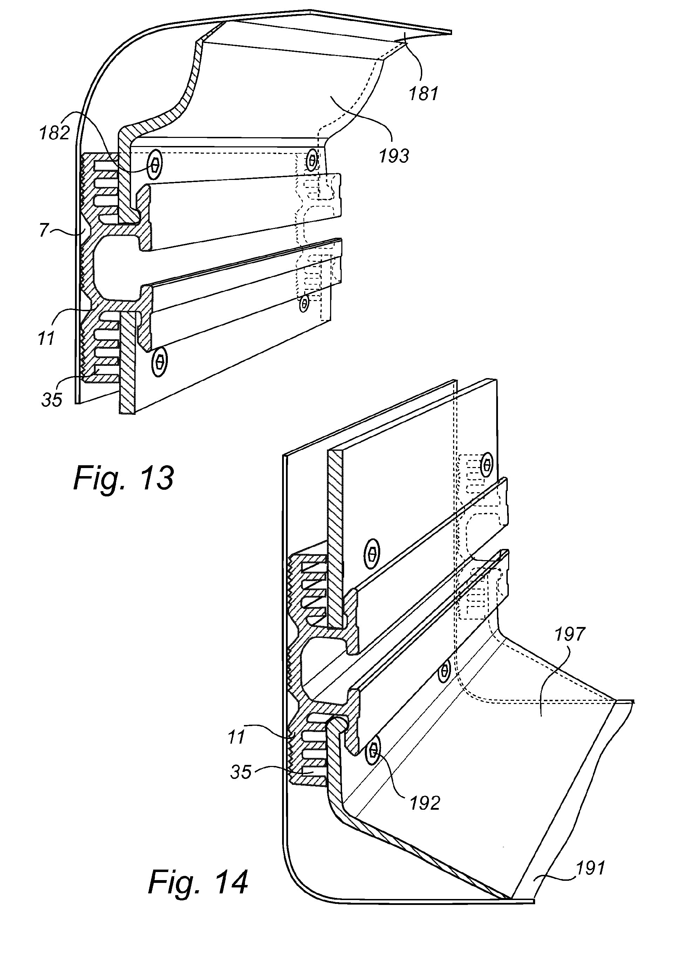

Fig. 13 shows a fastening rail 11 attached close to an inner ceiling surface 181 of a back space of a service vehicle. The fastening rail 11 is attached to an inner wall 7 of a vehicle wall. Secured to the fastening rail 11 by securing elements 182, i.e. a screw, is an edge covering panel 193. The securing element 182 is secured to the securing track 35 of the fastening rail 11 in a similar way as the wall panels are attached to the rail in Fig. 8.

Fig. 14 shows a fastening rail 11 attached close to an inner floor 191 of a back space of a service vehicle. The fastening rail 11 is attached to an inner wall 7 of a vehicle wall. Secured to the fastening rail 11 by securing elements 192, i.e. a screw, is an edge covering panel 197. The securing element 192 is secured to the securing track 35 of the fastening rail 11 in a similar way as the wall panels are attached to the rail in Fig. 8.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A fastening system (10, 10') adapted to be attached to an inner surface (7) of a cargo or a back space (2) of a service vehicle (1), said fastening system (10) comprises
at least one elongated fastening rail (11, 11 a, 11b, 11b', 11c', 11') for fastening an item, said fastening rail being adapted to be attached to said inner surface (7) of said cargo or back space (2) of said service vehicle (1),
at least one securing element (41, 70, 122, 132, 142, 152, 162, 172, 182, 192), wherein said at least one securing element (12) is adapted to press said item against at least a part of said fastening rail (11, 11 a, 11 b, 11b', 11c', 11').

2. A fastening system (10, 10') according to claim 1 wherein, said securing element (41, 70, 122, 132, 142, 152, 162, 172, 198, 192) is an element, which is not a part said fastening rail.

3. A fastening system (10) according to any one of the preceding claims, wherein said at least one securing element (41, 70, 122, 132, 142, 152, 162, 172, 182, 192) is a screw (41) comprising a screw head (42) and an at least partly threaded portion (43), which screw head (42) is adapted to press against said item (12a, 12b, 12c, 12d) during use and to be screwed into said fastening rail (11, 11a, 11b, 11b', 11c').

4. A fastening system (10) according to any one of the preceding claims, wherein said fastening rail (11, 11 a, 11 b, 11b', 11c') comprises at least one screw securing track (35) extending at least partly in the longitudinal direction of the fastening rail into which a screw (42) is adapted to be screwed into during use.

5. A fastening system (10) according to claim 4, wherein said screw securing track (35) comprises of two opposite arranged inner walls (37) extending in the longitudinal direction of said securing track (35), which inner walls (37) during use are adapted to be screwed into using a self tapping screw.

6. A fastening system (10, 10') according to any one of the preceding claims, wherein said fastening rail (11, 11 a, 11 b, 11b', 11c', 11') comprises at least one undercut groove (30, 30').

7. A fastening system (10, 10') according to any one of the preceding claims, wherein said fastening rail (11, 11 a, 11 b, 11b', 11c', 11') comprises a wall contacting area (22).

8. A fastening system (10, 10') according to claim 7, wherein said wall contacting area (22) is roughened and/or said wall contacting area (22) comprises grooves (28) extending in the longitudinal direction of the rail.

9. A fastening system (10, 10') according to any one of the preceding claims, wherein said fastening rail (11, 11 a, 11 b, 11b', 11c', 11') is adapted to be attached to said inner wall (7) by adhesive.

10. A fastening system (10, 10') according to claim 9, wherein said adhesive is a tape and/or glue.

11. A fastening system (10, 10') according to one of the any one of the preceding claims, wherein said fastening rail (11, 11 a, 11 b, 11b', 11c', 11') is adapted to be attached to said inner wall (7) by two different adhesives, wherein said first adhesive is a fast curing adhesive and said second adhesive is an adhesive which cures slower that said first adhesive.

12. A fastening system (10') according to any one of claims 1-2 or 4-11, wherein said securing element is a clip (70).

13. A fastening system (10, 10') according to any one of the preceding claims, wherein said fastening rail (11, 11 a, 11 b, 11b', 11c', 11') comprises at least one wall panel supporting element (32).

14. A fastening system (10, 10') according to any one of the preceding claims, wherein said item is a wall panel.

15. A fastening system (10, 10') according to any one of the claims 1-13, wherein said item is a cable holder, an illuminating device, a hook, a fastening bracket or a lashing eyelet.
